# EUROPÄISCHE PATENTSCHRIFT

(11) **EP 2 185 971 B1**
(45) Veröffentlichungstag und Bekanntmachung des Hinweises auf die Patenterteilung: **03.08.2016**
(21) Anmeldenummer: 08801327.1
(22) Anmeldetag: 12.09.2008
(51) Int. Cl.: F21V 7/00, F21V 29/00, F21Y 115/10

(54) **LEUCHT-VORRICHTUNG**
LIGHTING DEVICE
DISPOSITIF D'ÉCLAIRAGE

(30) Priorität: 14.09.2007 DE 102007043903
(43) Veröffentlichungstag der Anmeldung: 19.05.2010
(73) Patentinhaber: OSRAM GmbH, 80807 München (DE)
(72) Erfinder: DUSSAULT, David, 93073 Neutraubling (DE); BERTRAM, Ralph Peter, 93152 Nittendorf (DE); FIEGLER, Matthias, 82041 Deisenhofen (DE); VARGA, Horst, 93138 Lappersdorf (DE)
(74) Vertreter: Epping - Hermann - Fischer
(86) Internationale Anmeldenummer: PCT/DE2008/001535
(87) Internationale Veröffentlichungsnummer: WO 2009/033478

(56) Entgegenhaltungen:
- WO-A-2005/078338
- WO-A-2007/043211
- WO-A-2007/089599
- US-A1- 2004 218 388
- US-A1- 2006 087 866
- US-A1- 2006 203 465
- US-A1- 2006 203 466

## Beschreibung

Vorliegend werden verschiedene Varianten einer Leucht-Vorrichtung beschrieben, wobei die Leucht-Vorrichtung mindestens ein Leucht-Modul aufweist.

Diese Patentanmeldung beansprucht die Priorität der deutschen Patentanmeldung Nr. 102007043903.4.

Aus der Patentschrift DE 199 09 399 C1 ist ein flexibles LED-Mehrfachmodul bekannt, das sich für den Einbau in Leuchtengehäuse, insbesondere für Kraftfahrzeuge eignet. Das LED-Mehrfachmodul weist eine Mehrzahl von LEDs auf, die auf starre Leiterplatten montiert sind.

Die Druckschrift US 2006/0203465 A1 beschreibt eine Hinterleuchtungseinrichtung.

Die Druckschrift WO 2005/078338 A1 beschreibt eine Leucht-Vorrichtung gemäß dem Oberbegriff des Patentanspruch 1.

Eine zu lösende Aufgabe besteht vorliegend darin, eine Leucht-Vorrichtung mit verbesserten optischen Eigenschaften anzugeben. Diese Aufgabe wird durch eine Leucht-Vorrichtung gemäß Patentanspruch 1 gelöst.

Vorteilhafte Weiterbildungen der Leucht-Vorrichtung sind in den abhängigen Patentansprüchen angegeben.

Gemäß der Erfindung umfasst die Leucht-Vorrichtung mindestens einen Reflektor und mindestens ein Leucht-Modul, das mindestens ein Strahlung emittierendes Halbleiter-Bauelement und einen Bauelement-Träger mit mindestens einer Montagefläche aufweist, auf welcher das Strahlung emittierende Halbleiter-Bauelement montiert ist, wobei das Leucht-Modul in einer Verbindungsebene mit dem Reflektor verbunden ist, die durch Berührungspunkte zwischen dem Bauelement-Träger und dem Reflektor definiert ist, wobei die Montagefläche schräg zu der Verbindungsebene verläuft.

Weiter weist die Leucht-Vorrichtung einen Hohlraum auf, der zur Anordnung eines Kühlelements oder zur Führung eines Luftstroms vorgesehen ist, wobei der Bauelement-Träger den Hohlraum umschließt oder der Bauelement-Träger abgewinkelt ausgebildet ist, sodass der Hohlraum zwischen dem Bauelement-Träger und einem Modulträger ausgebildet ist.

Unter Fluid ist vorliegend eine Flüssigkeit oder ein Gas zu verstehen. Beispielsweise kann der Fluidstrom ein Luftstrom sein, der durch Konvektion oder mittels eines Lüfters herbeigeführt wird. Hierdurch kann mit Vorteil die im Betrieb des Leucht-Moduls entstehende Wärme an die Umgebung abgeführt werden. Als Kühlelement eignet sich beispielsweise eine Mehrzahl von Kühlrippen.

Vorzugsweise wird mittels der von dem Leucht-Modul erzeugten Strahlung eine ebene Fläche beleuchtet, die parallel zu der Verbindungsebene und damit schräg zu der Montagefläche des Bauelement-Trägers verläuft.

Strahlung, die mittels einer derartigen schrägen Anordnung erzeugt wird, schließt vorzugsweise mit der Flächennormalen der zu beleuchtenden ebenen Fläche einen Winkel ein, der größer ist als 0° und kleiner als 90°. Im Vergleich zu einer herkömmlichen flachen Anordnung mit senkrechtem Strahlungseinfall, ist vorliegend die Weglänge der Strahlung bis zu der zu beleuchtenden ebenen Fläche größer. Vorteilhafterweise ergibt sich hieraus insgesamt eine bessere Durchmischung der Strahlung benachbarter Halbleiter-Bauelemente und damit eine verbesserte Strahlungshomogenität. Bei einer vorteilhaften Ausgestaltung der Leucht-Vorrichtung ist das Leucht-Modul innerhalb des Reflektors angeordnet. Auf diese Weise kann insbesondere die von den einzelnen Halbleiter-Bauelementen des Leucht-Moduls erzeugte Strahlung mittels des Reflektors reflektiert werden. Vorzugsweise wird die Strahlung im Reflektor mehrmals reflektiert, so dass der Weg, den die Strahlung im Reflektor zurücklegt, vergrößert wird. Auch dies hat eine bessere Durchmischung der Strahlung zur Folge, das heißt die Strahlungshomogenität der von der Leucht-Vorrichtung emittierten Strahlung ist verbessert.

Die vorliegende Leucht-Vorrichtung kann im Vergleich zu einer Leucht-Vorrichtung ohne Reflektor mit einer relativ geringen Bautiefe hergestellt werden, da mittels des Reflektors schon bei geringerer Bautiefe eine ausreichende Strahlungshomogenität erzielt werden kann.

Darüber hinaus kann mittels des Reflektors die von den einzelnen Halbleiter-Bauelementen des Leucht-Moduls erzeugte Strahlung gebündelt werden. Beispielsweise kann ein von der Leucht-Vorrichtung erzeugter Strahlungskegel mittels des Reflektors auf einen vorgegebenen Öffnungswinkel eingeschränkt werden.

Ferner kann der Reflektor die von dem Leucht-Modul emittierte Strahlung in eine Hauptabstrahlrichtung reflektieren. Vorzugsweise verläuft die Hauptabstrahlrichtung parallel zu der Flächennormalen der zu beleuchtenden ebenen Fläche.

Gemäß einer bevorzugten Variante wird eine Querschnittsfläche des Reflektors, die parallel zur Verbindungsebene verläuft, in der Hauptabstrahlrichtung größer. Dies bedeutet, dass der Reflektor eine sich nach oben, das heißt in der Hauptabstrahlrichtung, öffnende Form aufweist.

Gemäß einer weiter bevorzugten Variante weist der Reflektor in zumindest einer Ebene, die senkrecht zu der Verbindungsebene angeordnet ist, eine symmetrische Querschnittsform auf. Beispielsweise kann die Querschnittsform ein Parabelausschnitt oder eine Parabel, ein Ellipsenausschnitt oder ein Hyperbelausschnitt sein. Die Oberfläche des Reflektors kann also zumindest stellenweise gekrümmt sein. Die Oberfläche kann jedoch auch zumindest teilweise oder vollständig eben sein. Insbesondere kann die Querschnittsform ein Trapezausschnitt sein.

Bei einer symmetrischen Ausbildung des Reflektors ist das Leucht-Modul bevorzugterweise auf einer Symmetrieachse des Reflektors angeordnet. Besonders bevorzugt ist die Symmetrieachse parallel zu der Hauptabstrahlrichtung.

Bei einer vorteilhaften Ausgestaltung der Leucht-Vorrichtung ist der Reflektor spiegelnd ausgebildet, das heißt der Reflektor reflektiert die Strahlung derart, dass der Ausfallswinkel gleich dem Einfallswinkel ist. Hierbei kann der Reflektor eine glatte Metall-Oberfläche aufweisen. Es ist jedoch auch möglich, dass der Reflektor diffus reflektierend ist. In diesem Fall kann der Reflektor eine Oberfläche mit Streuzentren, beispielsweise eine aufgeraute Oberfläche, aufweisen, wobei die Streuzentren die Strahlung in alle Raumrichtungen reflektieren können.

Gemäß einer bevorzugten Ausführungsform ist der Reflektor aus einer Kunststofffolie geformt. Eine derartige Ausbildung des Reflektors ermöglicht eine relativ leichte Bauweise des Reflektors. Insbesondere ist Kunststofffolie eine Thermofolie, die bei Erwärmung in die gewünschte Form gebracht werden kann.

Vorzugsweise umschließt der Reflektor einen Hohlraum, in welchem das Leucht-Modul angeordnet ist, das heißt der Reflektor ist nicht als Vollkörper ausgebildet. Hierdurch hat der Reflektor ein vorteilhaft geringes Gewicht.

Weiterhin muss die Oberfläche des Reflektors keine geschlossene Fläche sein, sondern kann beispielsweise am Boden eine Öffnung aufweisen, in welcher das Leucht-Modul angeordnet ist. Insbesondere ist das Leucht-Modul derart angeordnet, dass die Bodenöffnung des Reflektors durch das Leucht-Modul geschlossen ist.

Gemäß einer weiteren Variante ist der Reflektor mit einem Leuchtstoff beschichtet. Der Leuchtstoff kann zumindest einen Teil der von den Halbleiter-Bauelementen stammenden Strahlung in Strahlung mit größerer Wellenlänge umwandeln. Durch Mischung der ursprünglichen Strahlung mit der umgewandelten Strahlung kann mischfarbiges Licht, insbesondere weißes Licht, erzeugt werden. Es ist möglich verschiedenartige Leuchtstoffe zu verwenden, so dass vielfältige Farbmischungen und Farbtemperaturen erzielt werden können. Geeignete Leuchtstoffe, wie etwa ein YAG:Ce Pulver, sind zum Beispiel in der WO98/12757 beschrieben, deren Inhalt insofern hiermit durch Rückbezug aufgenommen wird.

Die Gesamtheit der Halbleiter-Bauelemente des Leucht-Moduls kann gleichfarbiges Licht erzeugen. Es ist jedoch auch denkbar, dass mindestens zwei Halbleiter-Bauelemente Strahlung verschiedener Farbe erzeugen. Hierdurch kann mischfarbiges Licht, insbesondere weißes Licht, erzeugt werden. Beispielsweise kann das Leucht-Modul ein erstes rotes Licht emittierendes Bauelement, ein zweites grünes Licht emittierendes Bauelement und ein drittes blaues Licht emittierendes Bauelement aufweisen. Mittels einer Kombination verschiedenfarbiger Bauelemente kann ein vergleichsweise guter Farbwiedergabeindex erzielt werden. Ferner ist mittels unterschiedlicher Mischung von rotem, grünem und blauem Licht der Weißpunkt verschiebbar.

Für das Leucht-Modul sind Halbleiter-Bauelemente geeignet, die oberflächenmontierbar sind. Derartige Halbleiter-Bauelemente erlauben eine einfache Montage derselben und tragen somit dazu bei, den Herstellungsaufwand für das Leucht-Modul zu reduzieren. Typischerweise weist jedes Halbleiter-Bauelement einen Gehäusekörper auf, in dem mindestens ein Strahlung emittierender Halbleiterkörper angeordnet ist. Ein im Rahmen der Erfindung geeignetes Halbleiter-Bauelement ist aus der Druckschrift WO 02/084749 A2 bekannt, deren Inhalt hiermit durch Rückbezug aufgenommen wird.

Bei einer vorteilhaften Ausgestaltung der Leucht-Vorrichtung umfasst das Leucht-Modul einen Bauelement-Träger, der mindestens eine erste und eine zweite Montagefläche aufweist, die schräg zueinander verlaufen. Alternativ können die beiden Montageflächen auch parallel zueinander verlaufen. Hierbei ist der Bauelement-Träger insbesondere quaderförmig ausgebildet.

Ferner können die erste Montagefläche und die zweite Montagefläche mit der Verbindungsebene den gleichen Winkel einschließen. Es ist jedoch auch denkbar, dass die Montageflächen mit der Verbindungsebene verschiedene Winkel einschließen. Vorteilhafterweise kann eine Fläche auch in einem Randbereich homogen beleuchtet werden, wenn die Leucht-Vorrichtung in dem Randbereich ein Leucht-Modul aufweist, bei welchem die Montageflächen unterschiedliche Winkel mit dem Modulträger einschließen. Ein im Innenbereich angeordnetes Leucht-Modul hingegen weist hierbei vorzugsweise Montageflächen auf, die mit dem Modulträger den gleichen Winkel einschließen.

Der Bauelement-Träger dient einerseits zur Befestigung der Bauelemente. Andererseits kann der Bauelement-Träger zur Verschaltung der Bauelemente Leiterbahnstrukturen und elektrische Anschlüsse, die mit einer Stromversorgung verbunden sind, aufweisen. Insbesondere weist der Bauelement-Träger mindestens eine Leiterplatte auf, wobei die Montagefläche die Oberfläche der Leiterplatte ist. Der Bauelement-Träger kann allein aus einer Leiterplatte bestehen, die derart gebogen ist, dass mindestens zwei Oberflächen der Leiterplatte schräg zueinander verlaufen. Alternativ kann der Bauelement-Träger einen Halter mit mindestens zwei zueinander schräg verlaufenden Oberflächen aufweisen, wobei auf mindestens einer Oberfläche eine Leiterplatte befestigt ist. Der Halter enthält bevorzugterweise ein Metall und besteht besonders bevorzugt aus Aluminium oder Kupfer. Als Leiterplatte ist beispielsweise eine Metallkernplatine geeignet, die für eine vergleichsweise gute Kühlung des Leucht-Moduls sorgt. Ferner kann die Leiterplatte zum Zwecke der Wärmeleitung Durchkontaktierungen aufweisen. Die Leiterplatte kann eine flexible Leiterplatte sein, die sich an die Form des Halters leicht anpassen lässt.

Gemäß einer bevorzugten Ausgestaltung der Leucht-Vorrichtung weist der Bauelement-Träger die Form eines Polyeders auf. Hierbei ist es nicht erforderlich, dass die Form des Bauelement-Trägers eine geschlossene Polyeder-Form ergibt. Vielmehr kann durch den Bauelement-Träger die Form eines Polyeders angedeutet sein. Bevorzugte Polyeder sind beispielsweise Prisma, Tetraeder, Pyramide oder Quader.

Gemäß einer weiter bevorzugten Ausgestaltung der Leucht-Vorrichtung ist die mindestens eine Montagefläche des Bauelement-Trägers parallel zu einer Begrenzungsfläche des Polyeders angeordnet.

Gemäß einer bevorzugten Ausführungsform weist die Leucht-Vorrichtung eine Mehrzahl von Reflektoren auf, wobei jeweils in einem Reflektor zumindest ein Leucht-Modul angeordnet ist. Bei Beleuchtung einer ebenen Fläche kann mittels einer Einheit aus Reflektor und Leucht-Modul ein Teilbereich der Fläche beleuchtet werden, der im Folgenden als Leuchtsegment bezeichnet wird. Vorzugsweise ist jeweils das in einem Reflektor angeordnete mindestens eine Leucht-Modul unabhängig von den Leucht-Modulen, welche in den anderen Reflektoren angeordnet sind, elektrisch ansteuerbar. Dadurch können auf der ebenen Fläche einzelne Leuchtsegmente erzeugt werden, die beispielsweise eine zeilenweise oder rechteckförmige Ausleuchtung der zu beleuchtenden Fläche ergeben. Geeignete Seitenverhältnisse eines rechteckförmigen Leuchtsegments sind beispielsweise 16:9 oder 4:3. Entsprechend kann ein Umriss des Reflektors diese Seitenverhältnisse aufweisen. Vorteilhafterweise sind die Seitenverhältnisse an gängige Bildschirmformate angepasst. Hierdurch kann die Leucht-Vorrichtung optimal zur Hinterleuchtung eines Bildschirms, beispielsweise eines LCDs (Liquid Crystal Display), verwendet werden. Der Bildschirm, allgemein gesprochen ein Hinterleuchtungselement, ist dem Reflektor nachgeordnet.

Weiterhin kann dem Reflektor eine Abdeckplatte nachgeordnet sein. Diese befindet sich typischerweise in der Hauptabstrahlrichtung vor dem Hinterleuchtungselement. Die Abdeckplatte kann insbesondere zum Schutz des Leucht-Moduls vor Beschädigungen vorgesehen sein. Ferner kann die Abdeckplatte ein Diffusor sein, wodurch die Strahlung besser durchmischt wird. Die Abdeckplatte kann auf dem Reflektor aufliegen und dadurch mittels des Reflektors stabilisiert werden. Dies hat zur Folge, dass die Auflagepunkte als Grenzen zwischen den Leuchtsegmenten der zu beleuchtenden Fläche zu erkennen sind. Hingegen sind bei der alternativen Ausführungsform, bei welcher die Abdeckplatte von dem Reflektor beabstandet ist, keine Grenzen zu sehen.

Vorliegend ist es vorteilhaft, wenn die Montagefläche schräg zu einer Hauptfläche des Hinterleuchtungselements verläuft. Hierbei schließt die Montagefläche des Bauelement-Trägers mit der Hauptfläche des Hinterleuchtungselements einen Winkel ein, der größer ist als 0° und kleiner oder gleich 90°. Die Hauptfläche ist in diesem Fall die zu beleuchtende ebene Fläche.

Weitere bevorzugte Merkmale, vorteilhafte Ausgestaltungen und Weiterbildungen sowie Vorteile einer Leucht-Vorrichtung gemäß der Erfindung ergeben sich aus den im Folgenden im Zusammenhang mit den Figuren 1 bis 15 näher erläuterten Ausführungsbeispielen.

Es zeigen:
Figur 1 eine schematische Querschnittsansicht eines ersten Ausführungsbeispiels einer Leucht-Vorrichtung zur Erläuterung der Erfindung,
Figur 2 eine perspektivische Ansicht des in Figur 1 dargestellten Ausführungsbeispiels zur Erläuterung der Erfindung,
Figur 3 eine schematische perspektivische Ansicht eines ersten Ausführungsbeispiels eines bevorzugten Leucht-Moduls zur Erläuterung der Erfindung,
Figur 4 eine schematische perspektivische Ansicht eines zweiten Ausführungsbeispiels eines bevorzugten Leucht-Moduls zur Erläuterung der Erfindung,
Figur 5 eine schematische perspektivische Ansicht eines dritten Ausführungsbeispiels eines bevorzugten Leucht-Moduls zur Erläuterung der Erfindung,
Figur 6 eine schematische perspektivische Ansicht eines vierten Ausführungsbeispiels eines bevorzugten Leucht-Moduls zur Erläuterung der Erfindung,
Figur 7 eine schematische Querschnittsansicht eines zweiten Ausführungsbeispiels einer Leucht-Vorrichtung zur Erläuterung der Erfindung,
Figur 8 eine perspektivische Ansicht des in Figur 7 dargestellten Ausführungsbeispiels zur Erläuterung der Erfindung,
Figur 9 eine schematische Draufsicht eines dritten Ausführungsbeispiels einer Leucht-Vorrichtung zur Erläuterung der Erfindung,
Figur 10 eine weitere schematische Draufsicht des in Figur 9 dargestellten Ausführungsbeispiels zur Erläuterung der Erfindung,
Figur 11 eine schematische perspektivische Ansicht einer Einheit eines vierten Ausführungsbeispiels einer Leucht-Vorrichtung gemäß der Erfindung,
Figur 12 eine weitere schematische perspektivische Querschnittsansicht des in Figur 11 dargestellten Ausführungsbeispiels,
Figur 13 eine schematische Querschnittsansicht einer Einheit eines fünften Ausführungsbeispiels einer Leucht-Vorrichtung gemäß der Erfindung,
Figur 14 eine schematische Querschnittsansicht eines sechsten Ausführungsbeispiels einer Leucht-Vorrichtung gemäß der Erfindung,
Figur 15 eine schematische Querschnittsansicht eines siebten Ausführungsbeispiels einer Leucht-Vorrichtung gemäß der Erfindung.

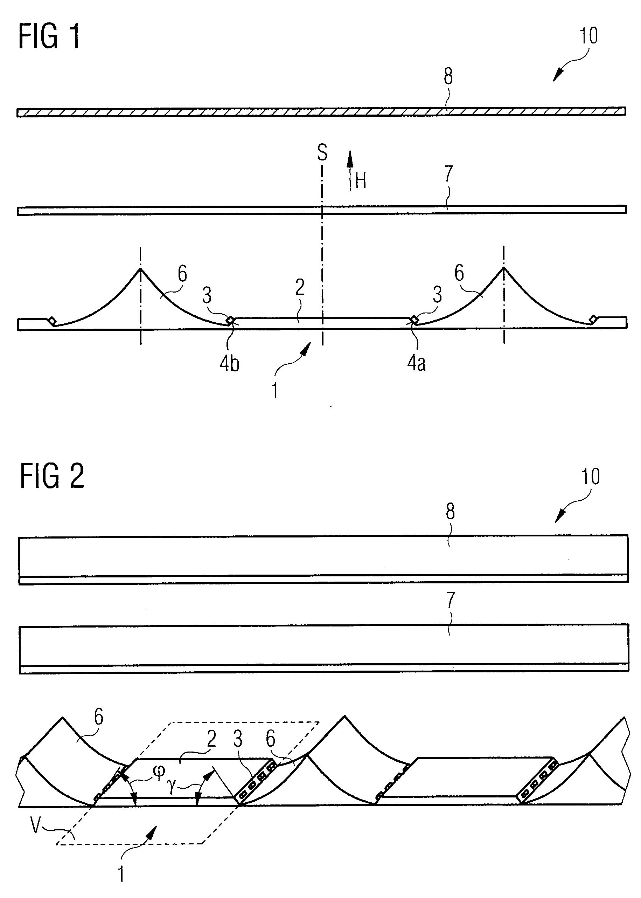

In den Figuren 1 und 2 ist eine Leucht-Vorrichtung 10 mit mehreren Leucht-Modulen 1 und Reflektoren 6 dargestellt. In jedem Reflektor 6 ist ein Leucht-Modul 1 mit mehreren Halbleiter-Bauelementen 3 angeordnet, wobei die Halbleiter-Bauelemente 3 auf einem Bauelement-Träger 2 montiert sind. Insbesondere sind die Halbleiter-Bauelemente 3 auf Seitenflächen des pyramidenstumpfartig ausgebildeten Bauelement-Trägers 2 angeordnet, die somit als Montageflächen 4a und 4b dienen.

Die Montageflächen 4a und 4b verlaufen schräg zu einer Verbindungsebene V, die durch Berührungspunkte zwischen dem Bauelement-Träger 2 und dem Reflektor 6 definiert ist. Die Verbindungsebene V ist vorzugsweise parallel zu einer Auflagefläche der Leucht-Vorrichtung 10 angeordnet. Die Montagefläche schließt mit der Verbindungsebene V den Winkel γ ein, wobei 0°<γ≤90° gilt. Der Winkel ϕ, den die Montagefläche 4b mit der Verbindungsebene V einschließt, kann 0°<γ≤90° sein. Der Winkel γ und der Winkel ϕ können verschieden oder gleich groß sein.

Strahlung, die von den Halbleiter-Bauelementen 3 erzeugt wird, trifft größtenteils auf dem Reflektor 6 auf und wird vorzugsweise in die Hauptabstrahlrichtung H reflektiert. Im Vergleich zu einer herkömmlichen Anordnung mit einer Emissionsrichtung parallel zur Hauptabstrahlrichtung H, ist vorliegend die Weglänge der Strahlung bis zu einer zu beleuchtenden ebenen Fläche größer. Vorteilhafterweise ergibt sich hieraus insgesamt eine bessere Durchmischung der Strahlung und damit eine verbesserte Strahlungshomogenität auf der ebenen Fläche. Die ebene Fläche ist vorzugsweise eine Hauptfläche eines Hinterleuchtungselements 8.

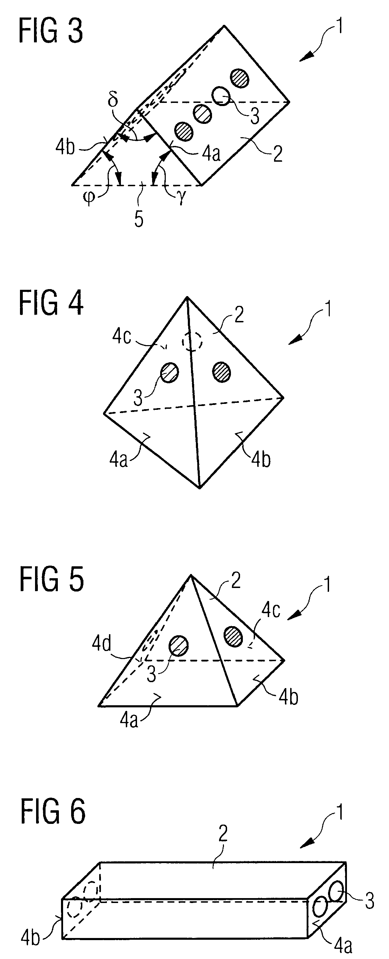

Wie in der Figur 5 zu erkennen ist, ist der Reflektor 6 bezüglich einer Symmetrieachse S, die senkrecht zu der Verbindungsebene V verläuft, symmetrisch ausgebildet. Das Leucht-Modul 1 ist vorteilhafterweise auf der Symmetrieachse S angeordnet. Die Querschnittsform des Reflektors 6 stellt in diesem Ausführungsbeispiel einen Parabelausschnitt dar.

Der Reflektor 6 ist an den Längsseiten des Leucht-Moduls 1 angeordnet. An den Breitseiten des Bauelement-Trägers 3 weist die Leucht-Vorrichtung 10 keinen Reflektor auf. Hier können stattdessen weitere Leucht-Vorrichtungen angeordnet werden, so dass die hintereinander angeordneten Reflektoren eine Rinnenform ergeben, die eine zeilenweise Beleuchtung einer ebenen Fläche ermöglicht.

Bei einem relativ flachen Reflektor 6, wie in den Figuren 1 und 2 dargestellt, reicht der Reflektor 6 nicht bis zu der Abdeckplatte 7, die beispielsweise ein Diffusor ist, heran. So kann sich die Strahlung benachbarter Leucht-Module 1 mischen, wodurch Oberkanten 9 des Reflektors 6 von einem Betrachter nicht zu erkennen sind.

In den Figuren 3 bis 6 sind Leucht-Module dargestellt, die für die vorliegend beschriebene Leucht-Vorrichtung besonders geeignet sind.

Das in Figur 3 dargestellte Leucht-Modul 1 weist einen Bauelement-Träger 2 und mehrere Halbleiter-Bauelemente 3 auf, wobei die Halbleiter-Bauelemente 3 auf einer ersten Montagefläche 4a und einer zweiten Montagefläche 4b des Bauelement-Trägers 2 angeordnet sind. Wie aus Figur 3 hervorgeht, verlaufen die erste Montagefläche 4a und die zweite Montagefläche 4b schräg zueinander, d.h. sie schließen einen Winkel δ ein, wobei 0°<δ<180° gilt.

So ist der Bauelement-Träger 2 in dem dargestellten Ausführungsbeispiel abgewinkelt ausgebildet, so dass unterhalb des Bauelement-Trägers 2 ein Hohlraum 5 vorhanden ist, in welchem beispielsweise ein Kühlelement angeordnet werden kann. Der Bauelement-Träger 2 kann einteilig oder mehrteilig ausgebildet sein. Vorzugsweise werden zur Herstellung eines mehrteiligen Bauelement-Trägers 2 Leiterplatten zusammengefügt, so dass die Leiterplatten den Winkel δ einschließen. Vorzugsweise sind die Leiterplatten dann auf einem Halter angeordnet (nicht dargestellt). Die jeweiligen Oberflächen der Leiterplatten bilden dann die Montageflächen 4a und 4b des Bauelement-Trägers 2. Die Leiterplatten sind insbesondere Metallkernplatinen, die für eine gute Kühlung des Leucht-Moduls 1 sorgen.

Weiterhin verlaufen die beiden Montageflächen 4a und 4b schräg zu einer Auflagefläche (gestrichelt gezeichnet) des Bauelement-Trägers 2. Hierbei schließt die Montagefläche 4a einen Winkel γ mit der Auflagefläche ein, wobei 0°<γ<90° gilt. Der Winkel ϕ, den die Montagefläche 4b mit der Auflagefläche einschließt, kann 0°<ϕ<90° sein. Der Winkel γ und der Winkel ϕ können verschieden oder gleich groß sein.

Figur 4 zeigt ein Leucht-Modul 1 mit einem tetraedrischen Bauelement-Träger 2. Der Bauelement-Träger 2 weist drei Seitenwände mit dreieckigen Montageflächen 4a, 4b, 4c auf. Die jeweiligen Montageflächen 4a, 4b, 4c verlaufen schräg zu einer schraffiert dargestellten Auflagefläche. Ferner verlaufen die Montageflächen 4a, 4b, 4c auch schräg zueinander. Auf den Montageflächen 4a, 4b, 4c ist jeweils ein Halbleiter-Bauelement 3 montiert. Beispielsweise können die Halbleiter-Bauelemente 3 eine rote, eine blaue und eine grüne Leuchtdiode sein, so dass das Leucht-Modul 3 insgesamt weißes Licht abstrahlt. Die Anordnung ist vorteilhaft platzsparend und sorgt außerdem für eine gute Durchmischung des verschiedenfarbigen Lichts.

Der Bauelement-Träger 2 ist nicht als geschlossener Tetraeder ausgebildet, sondern weist auf einer der Auflagefläche zugewandten Seite einen Hohlraum auf, in welchem beispielsweise ein Kühlelement angeordnet werden kann.
Bei dem in Figur 5 dargestellten Leucht-Modul 1 weist der Bauelement-Träger 2 des Leucht-Moduls 1 die Form einer Pyramide auf. Dem Bauelement-Träger 2 fehlt die Bodenfläche, so dass nur die Montageflächen 4a, 4b, 4c, 4d vorhanden sind. Somit ist der Bauelement-Träger 2 nicht als geschlossene Pyramide ausgebildet. Der Bauelement-Träger 2 umschließt einen Hohlraum, in welchem beispielsweise ein Kühlelement angeordnet werden kann.

Figur 6 zeigt ein Leucht-Modul 1 mit einem quaderförmigen Bauelement-Träger 2. Hierbei ist nicht die Hauptfläche des Bauelement-Trägers 2 zur Montage der Halbleiter-Bauelemente 3 vorgesehen, sondern zwei zueinander parallel angeordnete Seitenflächen, die somit als Montageflächen 4a und 4b dienen,.

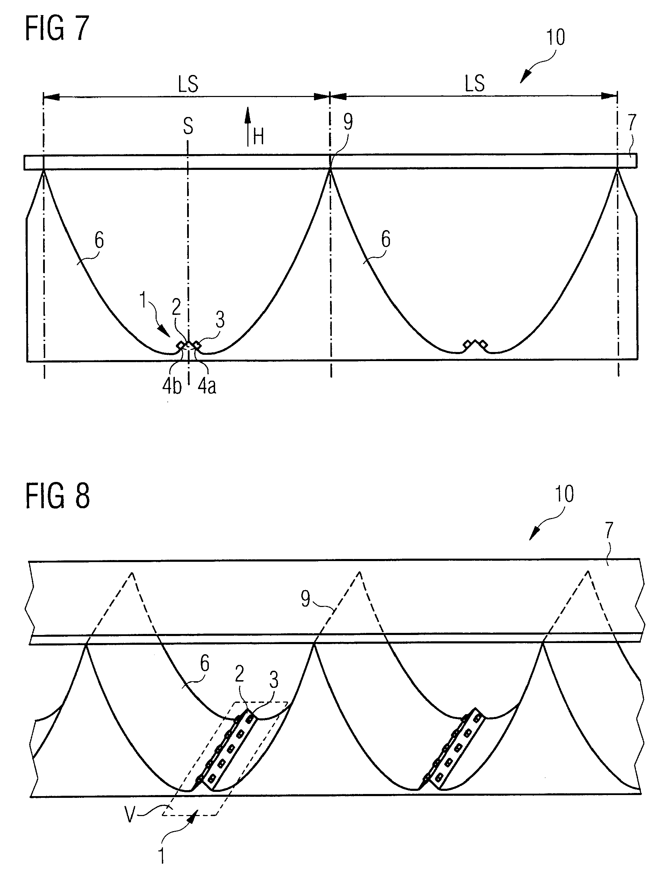

In den Figuren 7 und 8 ist im Gegensatz zu der in den Figuren 1 und 2 gezeigten Leucht-Vorrichtung eine Leucht-Vorrichtung 10 mit relativ hohen Reflektoren 6 dargestellt. Hierbei reichen die Reflektoren 6 bis zu der Abdeckplatte 7 heran. Insbesondere dienen die Reflektoren 6 als Stützen für die Abdeckplatte 7, wobei die Abdeckplatte 7 auf den Oberkanten 9 der Reflektoren 6 aufliegt. Hierdurch ist die Abdeckplatte 7 insgesamt stabilisiert.

Bei diesem Ausführungsbeispiel bilden die Oberkanten 9, welche die Abdeckplatte 7 berühren, eine für einen äußeren Betrachter wahrnehmbare Grenze zwischen benachbarten Leuchtsegmenten LS. Denn an diesen Grenzen ist die Strahlung schlechter durchmischt als in Bereichen zwischen den Oberkanten 9.

Die Leuchtsegmente LS entstehen durch die Beleuchtung einer ebenen Fläche mittels einer Einheit aus einem Reflektor 6 und mindestens einem Leucht-Modul 1, welches in dem Reflektor 6 angeordnet ist. Da der Reflektor 6 im vorliegenden Ausführungsbeispiel das Leucht-Modul 1 nur auf zwei Seiten begrenzt, kann die ebene Fläche durch ein in jeweils einem Reflektor 6 angeordnetes Leucht-Modul 1 zeilenweise beleuchtet werden. Voraussetzung hierfür ist, dass die Leucht-Module in den einzelnen Reflektoren separat ansteuerbar sind.

Wie aus den Figuren 7 und 8 hervorgeht, weist der Bauelement-Träger 2 eine wie in der Figur 3 näher beschriebene Form auf. Diese Form bewirkt, dass die Bauelemente 3, die auf der Montagefläche 4a angeordnet sind, einen geringeren Abstand von den Bauelementen 3, die auf der Montagefläche 4b angeordnet sind, aufweisen als dies bei dem Bauelement-Träger 2 des Ausführungsbeispiels der Figuren 1 und 2 der Fall ist.

Durch den Abstand der Bauelemente, die auf verschiedenen Montageflächen angeordnet sind, kann eine gewünschte Leuchtdichte und Farbhomogenität eingestellt werden.

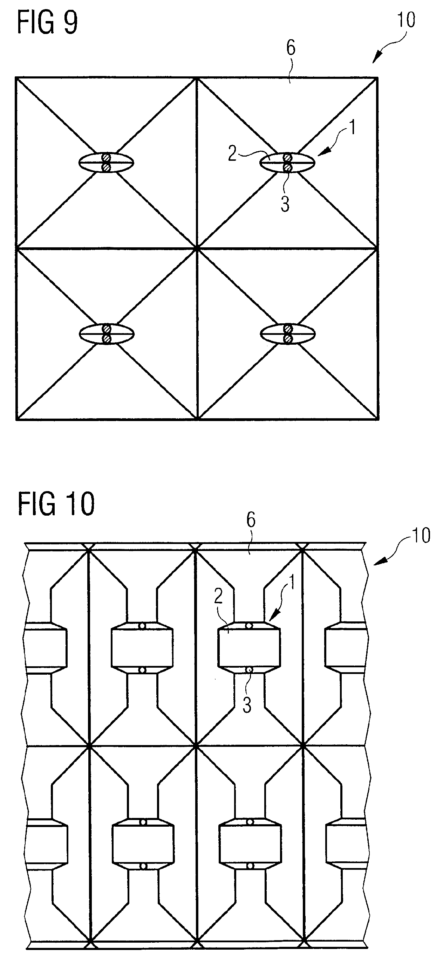

Die Figuren 9 und 10 zeigen eine Leucht-Vorrichtung 10 mit mehreren Reflektoren 6, welche die in den Reflektoren 6 angeordneten Leucht-Module 1 allseitig umgeben. Die Umrisse der Reflektoren 6 an der Oberseite sind rechteckförmig, so dass bei der Beleuchtung einer ebenen Fläche jeweils rechteckförmige Leucht-Segmente entstehen. Geeignete Seitenverhältnisse eines rechteckförmigen Leucht-Segments sind beispielsweise 16:9 oder 4:3. Entsprechend kann der Umriss des Reflektors 6 diese Seitenverhältnisse aufweisen. Vorteilhafterweise sind die Seitenverhältnisse an gängige Bildschirmformate angepasst.

Vorzugsweise ist bei diesem Ausführungsbeispiel das in einem Reflektor 6 angeordnete Leucht-Modul 1 separat von einem in einem benachbarten Reflektor 6 angeordneten Leucht-Modul 1 ansteuerbar.

Die Leucht-Vorrichtung 10 kann aus einzelnen Einheiten in Steckbauweise zusammengesetzt werden. Eine einzelne Einheit umfasst hierbei jeweils einen Reflektor 6 und mindestens ein Leucht-Modul 1, das in dem Reflektor 6 angeordnet ist. Ferner umfasst die Einheit die benötigten elektrischen Anschlüsse. Auf diese Weise kann eine Leucht-Vorrichtung gewünschter Größe aufgebaut werden. Da die Einheiten vorzugsweise an gängige Bildschirmformate angepasste Seitenverhältnisse aufweisen, kann eine Leucht-Vorrichtung hergestellt werden, die durch ihre Seitenverhältnisse zur Hinterleuchtung eines Bildschirms besonders geeignet ist.

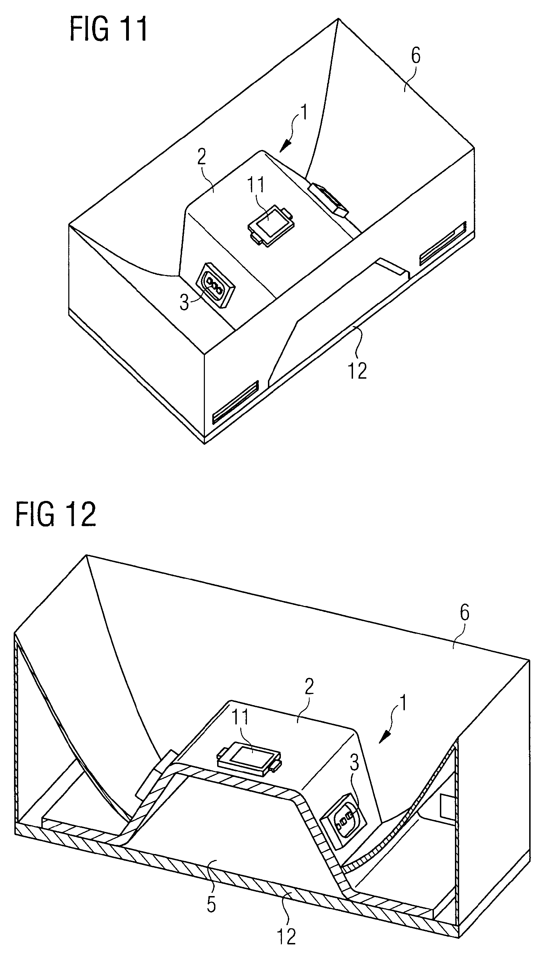

In Figur 11 ist eine detaillierte komplette Ansicht und in Figur 12 eine detaillierte Querschnittsansicht einer bevorzugten Einheit dargestellt.

Die Einheit umfasst einen Reflektor 6 und ein Leucht-Modul 1, das allseitig von dem Reflektor 6 umgeben ist. Der Reflektor 6 weist am Boden eine Öffnung auf, in welcher das Leucht-Modul 1 angeordnet ist. Insbesondere verschließt der Bauelement-Träger 2 die Öffnung am Boden. Der Reflektor 6 kann aus einer thermogeformten Kunststofffolie gebildet sein.

Der Bauelement-Träger 2 weist im Querschnitt eine Trapezform und damit schräg zueinander verlaufende Seitenflächen auf, die als Montageflächen 4a und 4b dienen.

Die Montageflächen 4a und 4b verlaufen ferner schräg zu einer Verbindungsebene (nicht dargestellt), in welcher das Leucht-Modul 1 den Reflektor 6 berührt, und außerdem schräg zu einem ebenen Modulträger 12, auf welchem das Leucht-Modul 1 montiert ist. Durch die schräge Anordnung der Halbleiter-Bauelemente 3 in dem Reflektor 6 kann eine vergleichsweise gute Durchmischung der von den Halbleiter-Bauelementen 3 erzeugten Strahlung erzielt werden. Die Halbleiter-Bauelemente 3 können, wie dargestellt, mehrere Halbleiterkörper aufweisen.

Durch die abgewinkelte Form des Bauelement-Trägers 2 ist zwischen diesem und dem Modulträger 12 ein Hohlraum 5 ausgebildet. In dem Hohlraum 5 kann ein Kühlelement angeordnet werden, das sich vorzugsweise in direktem Kontakt mit dem Bauelement-Träger 2 befindet, so dass die im Betrieb entstehende Wärme direkt abgeführt werden kann. Das Kühlelement 8 kann eine Kühlrippe oder ein Metallblock sein, der insbesondere Kupfer enthält.

Der Bauelement-Träger 2 kann einteilig oder mehrteilig ausgebildet sein. Vorzugsweise werden zur Herstellung eines mehrteiligen Bauelement-Trägers 2 Leiterplatten zusammengefügt. Besonders bevorzugt sind die Leiterplatten dann auf einem Halter angeordnet (nicht dargestellt). Die Leiterplatten sind insbesondere Metallkernplatinen, die für eine gute Kühlung des Leucht-Moduls 1 sorgen. Ferner können die Leiterplatten flexibel sein, so dass sie leicht gebogen werden können und somit jede mögliche Form annehmen können. Zusätzlich zu den Halbleiter-Bauelementen 3 kann das Leucht-Modul 1 eine Sensoreinheit 11 aufweisen. Mittels der Sensoreinheit 11 kann die von Halbleiter-Bauelementen 3 abgegebene Strahlung detektiert und entsprechend der gewünschten Abstrahlcharakteristik eingestellt werden.

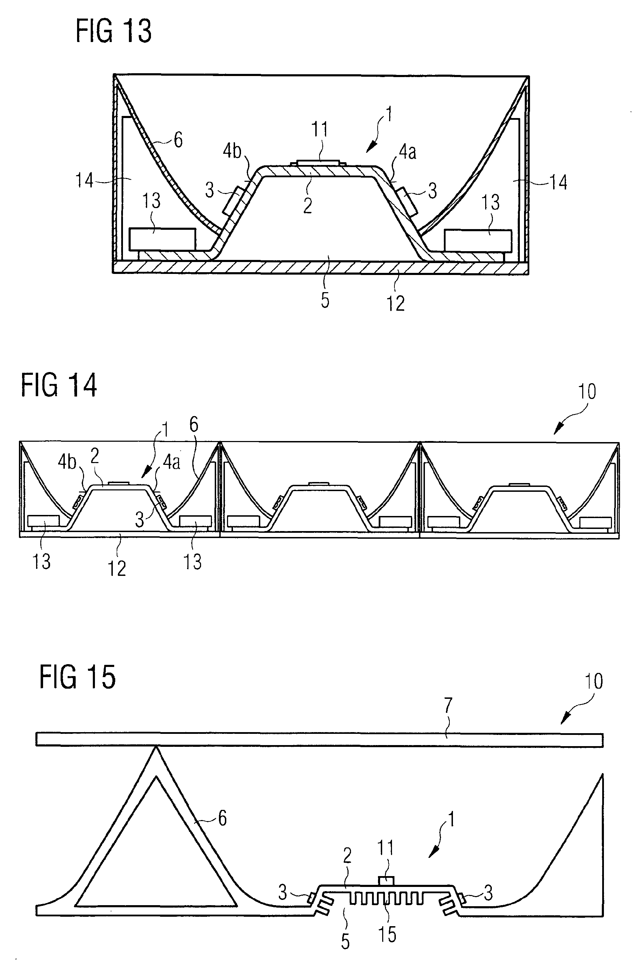

Wie in Figur 13 dargestellt ist, können in Hohlräumen 14, die zwischen dem Bauelement-Träger 2 und dem Reflektor 6 vorhanden sind, Kabelführungen 13, die für den elektrischen Anschluss des Leucht-Moduls 1 vorgesehen sind, untergebracht werden.

Figur 14 verdeutlicht, wie durch das Zusammenfügen einer Mehrzahl von Einheiten eine Leucht-Vorrichtung 10 aufgebaut werden kann.

Durch Figur 15 soll eine mögliche Nutzung des Hohlraums 5 unterhalb des Bauelement-Trägers 2 zur Kühlung des Leucht-Moduls 1 illustriert werden. Gemäß dem dargestellten Ausführungsbeispiel erfolgt die Kühlung mittels Kühlrippen 15, die direkt am Bauelement-Träger 2 angeordnet sind und in den Hohlraum 5 hineinragen. Eine zusätzliche Kühlung kann mittels eines durch den Hohlraum 5 geführten Luftstroms erfolgen.

## Patentansprüche

1. Leucht-Vorrichtung (10) mit mindestens einem Reflektor (6) und mit mindestens einem Leucht-Modul (1), das mindestens ein Strahlung emittierendes Halbleiter-Bauelement (3) und einen Bauelement-Träger (2) mit mindestens einer Montagefläche (4a, 4b) aufweist, auf welcher das Strahlung emittierende Halbleiter-Bauelement (3) montiert ist, wobei das Leucht-Modul (1) in einer Verbindungsebene (V) mit dem Reflektor (6) verbunden ist, die durch Berührungspunkte zwischen dem Bauelement-Träger (2) und dem Reflektor (6) definiert ist, wobei die Montagefläche (4a, 4b) schräg zu der Verbindungsebene (V) verläuft,
**dadurch gekennzeichnet,**
**dass** die Leucht-Vorrichtung (10) einen Hohlraum (5) aufweist, der zur Anordnung eines Kühlelements oder zur Führung eines Luftstromes vorgesehen ist, wobei der Bauelement-Träger (2) den Hohlraum (5) umschließt oder der Bauelement-Träger (2) abgewinkelt ausgebildet ist, sodass der Hohlraum (5) zwischen dem Bauelement-Träger (2) und einem Modulträger (12) ausgebildet ist.

2. Leucht-Vorrichtung (10) nach Anspruch 1, wobei das Leucht-Modul (1) innerhalb des Reflektors (6) angeordnet ist.

3. Leucht-Vorrichtung (10) nach einem der vorhergehenden Ansprüche, wobei
eine Querschnittsfläche des Reflektors (6), die parallel zur Verbindungsebene (V) verläuft, in der Hauptabstrahlrichtung (H) größer wird.

4. Leucht-Vorrichtung (10) nach einem der vorhergehenden Ansprüche, wobei
der Reflektor (6) in zumindest einer Ebene, die senkrecht zu der Verbindungsebene (V) angeordnet ist, eine symmetrische Querschnittsform aufweist.

5. Leucht-Vorrichtung (10) nach Anspruch 4, wobei die Querschnittsform ein Parabelausschnitt oder eine Parabel, ein Ellipsenausschnitt, ein Hyperbelausschnitt oder ein Trapezausschnitt ist.

6. Leucht-Vorrichtung (10) nach einem der vorhergehenden Ansprüche, wobei
der Reflektor (6) mit einem Leuchtstoff beschichtet ist.

7. Leucht-Vorrichtung (10) nach einem der vorhergehenden Ansprüche, wobei
der Reflektor (6) aus einer Kunststofffolie geformt ist.

8. Leucht-Vorrichtung (10) nach einem der vorhergehenden Ansprüche, wobei
der Bauelement-Träger (2) mindestens eine erste und eine zweite Montagefläche (4a, 4b) aufweist, die schräg zueinander verlaufen.

9. Leucht-Vorrichtung (10) nach einem der vorhergehenden Ansprüche, wobei
der Bauelement-Träger (2) mindestens eine Leiterplatte aufweist und die Montagefläche (4a, 4b) die Oberfläche der Leiterplatte ist.

10. Leucht-Vorrichtung (10) nach einem der vorhergehenden Ansprüche, wobei
der Bauelement-Träger (2) die Form eines Polyeders aufweist.

11. Leucht-Vorrichtung (10) nach Anspruch 10, wobei die mindestens eine Montagefläche (4a, 4b) parallel zu einer Begrenzungsfläche des Polyeders angeordnet ist.

12. Leucht-Vorrichtung (10) nach Anspruch 1, wobei in Hohlräumen (14), die zwischen dem Bauelement-Träger (2) und dem Reflektor (6) vorhanden sind, Kabelführungen (13), die für den elektrischen Anschluss des Leucht-Moduls (1) vorgesehen sind, untergebracht sind.

13. Leucht-Vorrichtung (10) nach einem der vorhergehenden Ansprüche, die eine Mehrzahl von Reflektoren (6) aufweist, wobei
jeweils das in einem Reflektor (6) angeordnete mindestens eine Leucht-Modul (1) unabhängig von den Leucht-Modulen (1), welche in den anderen Reflektoren (6) angeordnet sind, elektrisch ansteuerbar ist.

14. Leucht-Vorrichtung (10) nach einem der vorhergehenden Ansprüche, wobei
dem Reflektor (6) eine Abdeckplatte in Form eines Diffusors (7) oder ein Hinterleuchtungselement (8) in Form eines LCDs nachgeordnet ist.

15. Leucht-Vorrichtung (10) nach Anspruch 14, wobei die Montagefläche (4a, 4b) schräg zu einer Hauptfläche des Hinterleuchtungselements (8) verläuft.

## Claims

1. Luminous device (10) comprising at least one reflector (6) and comprising at least one luminous module (1) which has at least one radiation-emitting semiconductor component (3) and a component carrier (2) having at least one mounting area (4a, 4b) on which the radiation-emitting semiconductor component (3) is mounted, wherein the luminous module (1) is connected to the reflector (6) in a connection plane (V) defined by points of contact between the component carrier (2) and the reflector (6), wherein the mounting area (4a, 4b) extends obliquely with respect to the connection plane (V)
**characterized in that**
the luminous device (10) has a cavity (5) provided for arranging a cooling element or for guiding an air flow, wherein the component carrier (2) encloses the cavity (5) or the component carrier (2) is formed in an angular fashion, such that the cavity (5) is formed between the component carrier (2) and a module carrier (12).

2. Luminous device (10) according to Claim 1, wherein the luminous module (1) is arranged within the reflector (6).

3. Luminous device (10) according to any of the preceding claims, wherein
a cross-sectional area of the reflector (6) which extends parallel to the connection plane (V) becomes larger in the main emission direction (H).

4. Luminous device (10) according to any of the preceding claims, wherein
the reflector (6) has a symmetrical cross-sectional form in at least one plane arranged perpendicular to the connection plane (V).

5. Luminous device (10) according to Claim 4, wherein the cross-sectional form is a parabola segment or a parabola, an ellipse segment, a hyperbola segment or a trapezoid segment.

6. Luminous device (10) according to any of the preceding claims, wherein
the reflector (6) is coated with a phosphor.

7. Luminous device (10) according to any of the preceding claims, wherein
the reflector (6) is formed from a plastic film.

8. Luminous device (10) according to any of the preceding claims, wherein
the component carrier (2) has at least one first and one second mounting area (4a, 4b) which extend obliquely with respect to one another.

9. Luminous device (10) according to any of the preceding claims, wherein
the component carrier (2) has at least one printed circuit board and the mounting area (4a, 4b) is the surface of the printed circuit board.

10. Luminous device (10) according to any of the preceding claims, wherein
the component carrier (2) has the form of a polyhedron.

11. Luminous device (10) according to Claim 10,
wherein
the at least one mounting area (4a, 4b) is arranged parallel to a boundary face of the polyhedron.

12. Luminous device (10) according to Claim 1, wherein cable guides (13) provided for the electrical connection of the luminous module (1) are accommodated in cavities (14) present between the component carrier (2) and the reflector (6).

13. Luminous device (10) according to any of the preceding claims, which has a plurality of reflectors (6), wherein
in each case the at least one luminous module (1) arranged in one reflector (6) is electrically driveable independently of the luminous modules (1) arranged in the other reflectors (6).

14. Luminous device (10) according to any of the preceding claims, wherein
a covering plate in the form of a diffuser (7) or a backlighting element (8) in the form of an LCD is disposed downstream of the reflector (6).

15. Luminous device (10) according to Claim 14,
wherein
the mounting area (4a, 4b) extends obliquely with respect to a main area of the backlighting element (8).

## Revendications

1. Dispositif d'éclairage (10) avec au moins un réflecteur (6) et avec au moins un module d'éclairage (1) qui comporte au moins un composant à semi-conducteur (3) émettant un rayonnement et un support de composant (2), avec au moins une surface de montage (4a, 4b) sur laquelle le composant à semi-conducteur (3) émettant un rayonnement est monté, le module d'éclairage (1) étant relié avec le réflecteur (6) dans un plan de liaison (V) qui est défini par des points de contact entre le support de composant (2) et le réflecteur (6), la surface de montage (4a, 4b) s'étendant en inclinaison par rapport au plan de liaison (V),
**caractérisé en ce que**
le dispositif d'éclairage (10) comporte une cavité (5) qui est prévue pour placer un élément de refroidissement ou pour guider un flux d'air, le support de composant (2) entourant la cavité (5) ou le support de composant (2) étant conçu en étant coudé, de sorte que la cavité (5) soit conçue entre le support de composant (2) et un support de module (12).

2. Dispositif d'éclairage (10) selon la revendication 1, le module d'éclairage (1) étant placé à l'intérieur du réflecteur (6).

3. Dispositif d'éclairage (10) selon l'une quelconque des revendications précédentes,
une surface de section transversale du réflecteur (6) qui s'étend à la parallèle du plan de liaison (V) s'agrandissant dans la direction de rayonnement principal (H).

4. Dispositif d'éclairage (10) selon l'une quelconque des revendications précédentes,
dans au moins un plan qui est placé à la perpendiculaire du plan de liaison (V), le réflecteur (6) présentant une forme de section transversale symétrique.

5. Dispositif d'éclairage (10) selon la revendication 4,
la forme de section transversale étant un secteur parabolique ou une parabole, un secteur elliptique, un secteur hyperbolique ou un secteur trapézoïdal.

6. Dispositif d'éclairage (10) selon l'une quelconque des revendications précédentes,
le réflecteur (6) étant revêtu d'une substance luminescente.

7. Dispositif d'éclairage (10) selon l'une quelconque des revendications précédentes,
le réflecteur (6) étant façonné à partir d'un film en matière plastique.

8. Dispositif d'éclairage (10) selon l'une quelconque des revendications précédentes,
le support de composant (2) comportant au moins une première et une deuxième surfaces de montage (4a, 4b) qui s'étendent en inclinaison l'une par rapport à l'autre.

9. Dispositif d'éclairage (10) selon l'une quelconque des revendications précédentes,
le support de composant (2) comportant au moins une carte de circuits imprimés et la surface de montage (4a, 4b) étant la surface de la carte de circuits imprimés.

10. Dispositif d'éclairage (10) selon l'une quelconque des revendications précédentes,
le support de composant (2) présentant la forme d'un polyèdre.

11. Dispositif d'éclairage (10) selon la revendication 10,
l'au moins une surface de montage (4a, 4b) étant placée à la parallèle d'une surface de délimitation du polyèdre.

12. Dispositif d'éclairage (10) selon la revendication 1,
dans des cavités (14) qui sont présentes entre le support de composant (2) et le réflecteur (6) étant logés des chemins de câble (13) qui sont prévus pour la connexion électrique du module d'éclairage (1).

13. Dispositif d'éclairage (10) selon l'une quelconque des revendications précédentes, qui comporte une pluralité de réflecteurs (6),
l'au moins un module d'éclairage (1) qui est placé dans un réflecteur (6) étant chaque fois électriquement actionnable indépendamment des modules d'éclairage (1) qui sont placés dans les autres réflecteurs (6).

14. Dispositif d'éclairage (10) selon l'une quelconque des revendications précédentes,
en aval du réflecteur (6) étant placée une plaque de recouvrement sous la forme d'un diffuseur (7) ou un élément de rétro-éclairage (8) sous la forme d'un LCD.

15. Dispositif d'éclairage (10) selon la revendication 14,
la surface de montage (4a, 4b) s'étendant en inclinaison par rapport à une surface principale de l'élément de rétro-éclairage (8).
